# EUROPÄISCHE PATENTANMELDUNG

(11) **EP 2 631 794 A1**
(43) Veröffentlichungstag der Anmeldung: **28.08.2013**
(21) Anmeldenummer: 12157135.0
(22) Anmeldetag: 27.02.2012
(51) Int. Cl.: G06F 9/445

(54) **Verfahren und Netzwerksystem zum Bereitstellen eines Anwendungsprozesses auf einem Netzwerkprozessserver einer Netzwerkinfrastruktur**

(71) Anmelder: Deutsche Telekom AG, 53113 Bonn (DE)
(72) Erfinder: Hacke, Marcus, 61476 Kronberg (DE); Mosler, Christoph, 53797 Lohmar (DE); Wittig, Hartmut, 69123 Heidelberg (DE)
(74) Vertreter: Klinski, Robert

(57) **Zusammenfassung**

Die Erfindung betrifft Verfahren und System zum Bereitstellen eines Anwendungsprozesses auf einem Netzwerkprozessserver einer Netzwerkserver-Infrastruktur, mit Auswählen (201) einer Anwendungsprozessbeschreibung aus einer Anzahl von Anwendungsprozessbeschreibungen, um eine ausgewählte Anwendungsprozessbeschreibung zu erhalten, wobei die Anzahl von Anwendungsprozessbeschreibungen auf einem Netzwerkdatenserver bereitgestellt ist und wobei jede Anwendungsprozessbeschreibung einen Anwendungsprozess definiert, Bereitstellen (203) eines ausführbaren Anwendungsprozessquellcodes, welcher der ausgewählten Anwendungsprozessbeschreibung zugeordnet ist, und Übertragen (205) des ausführbaren Anwendungsprozessquellcodes oder der ausgewählten Anwendungsprozessbeschreibung zu dem Netzwerkprozessserver über ein Kommunikationsnetzwerk, um den Anwendungsprozess auf dem Netzwerkprozessserver bereitzustellen.

## Beschreibung

### TECHNISCHES GEBIET

Die vorliegende Erfindung betrifft ein Verfahren und ein System zum Bereitstellen eines Anwendungsprozesses auf einem Netzwerkserver einer Netzwerkinfrastruktur, insbesondere einer Cloud-Processing-Infrastruktur.

Softwaretechnische Anwendungsprozesse spielen in modernen Unternehmen eine zentrale Rolle in nahezu allen Unternehmensbereichen. Beispielhafte Anwendungsprozesse sind Verwaltung des Materialeinkaufs oder der Materialbeschaffung, Inventur, Personalverwaltung, Steuerung von Produktionsprozessen oder Informationsverwaltung. Üblicherweise werden die Anwendungsprozesse in Software implementiert und in der Gestalt einer Anwendungssoftware bereitgestellt.

Zur Implementierung der Anwendungssoftware werden zunächst die Anwendungsprozesse definiert. Hierbei können der Zweck oder die Wirkung des jeweiligen Anwendungsprozesses sowie die Schnittstellen zu anderen Anwendungsprozessen mittels einer Anwendungsprozessbeschreibung definiert werden. Eine Anwendungsprozessbeschreibung wird üblicherweise durch Experten erzeugt, wobei unterstützend Softwareprogramme wie etwa graphische Benutzerschnittstellen mit vorgegeben Designparametern verwendet werden können. In der Druckschrift EP 1 589 416 A2 ist beispielhaft beschrieben, wie Anwendungsprozessbeschreibungen erzeugt werden können.

Zur Realisierung der Anwendungsprozesse, welche durch die Anwendungsprozessbeschreibungen beschrieben sind, werden die Anwendungsprozessbeschreibungen entweder mittels eines Kompilierers kompiliert oder mittels eines Interpreters bearbeitet, um einen ausführbaren Quellcode zu erhalten. Die automatische Erzeugung eines ausführbaren Quellcodes ist beispielsweise in der Druckschrift DE 100 08 632 B4 beschrieben.

Die Anwendungssoftware wird üblicherweise auf einer stationären Datenverarbeitungsanlage eines Unternehmens installiert und ausgeführt. Derartige Datenverarbeitungsanlagen können beispielsweise Server umfassen, auf denen die Anwendungssoftware mit den Anwendungsprozessen ausgeführt wird. Die Implementierung der Anwendungssoftware auf einer Datenverarbeitungsanlage ist jedoch komplex und teuer, insbesondere wenn die Anwendungssoftware an die Bedürfnisse eines Unternehmens angepasst werden muss. Eine nachträgliche Erweiterung der Anwendungssoftware durch neue Anwendungsprozesse oder eine Änderung der bereits implementierten Anwendungsprozesse ist oft entweder nicht möglich oder nur mit einem hohen Aufwand realisierbar.

Die stationär auf einer Datenverarbeitungsanlage installierte Software kann prinzipiell auch mittels einer Netzwerkinfrastruktur, beispielsweise einer Cloud-Processing-Infrastruktur, bereitgestellt werden.

Eine Cloud-Processing-Infrastruktur entsteht durch eine Auslagerung von lokalen, stationären Informationstechnologie-Ressourcen, wie etwa Rechenkapazität, Datenspeicher, Netzwerkkapazitäten oder Software in eine Netzwerkinfrastruktur, welche die benötigten Informationstechnologie-Ressourcen in einem externen Netzwerk bereitstellt. Der Zugriff auf die ausgelagerten Informationstechnologie-Ressourcen erfolgt über ein Kommunikationsnetzwerk, beispielsweise über das Internet. Der Cloud-Processing-Ansatz ermöglicht insbesondere die Bereitstellung von Software-Infrastruktur als Service, bei dem die Anwendungssoftware beispielsweise nicht erwerben, sondern gemietet wird.

Durch die Auslagerung der Anwendungssoftware auf die externen Server der Cloud-Processing-Infrastruktur ändert sich jedoch im Wesentlichen nur der Softwareinstallationsort. Die vorstehend beschriebenen Nachteile der stationär installierten Anwendungssoftware werden dadurch jedoch nicht gelöst. Denn auch im Falle einer Cloud-Processing-Implementierung ist eine Anpassung der ausgelagerten Anwendungssoftware an die Bedürfnisse eines Unternehmens entweder nicht möglich oder mit einem hohen Aufwand verbunden.

### ZUSAMMENFASSUNG

Es ist daher die Aufgabe der vorliegenden Erfindung, ein effizienteres Konzept zur Bereitstellung von Geschäftsprozessen bzw. Anwendungsprozessen zu schaffen.

Diese Aufgabe wird durch die Merkmale der unabhängigen Ansprüche gelöst. Vorteilhafte Weiterbildungsformen sind Gegenstand der Beschreibung, der Zeichnungen sowie der abhängigen Ansprüche.

Die Erfindung basiert auf der Erkenntnis, dass die vorstehend genannte Aufgabe durch modulare und vordefinierte Anwendungsprozesse gelöst werden kann, welche separat, also nicht notwendigerweise zusammen mit einer Anwendungssoftware, bereitgestellt werden. So können vorkonfigurierte Anwendungsprozesse beispielsweise anhand einer Anwendungsprozessbeschreibung, welche in Software vorliegen kann, ausgewählt werden. Da die Anwendungsprozessbeschreibung nicht notwendigerweise als ausführbarer Quellcode vorliegt, kann diese gegebenenfalls an die Bedürfnisse eines Unternehmens einfach angepasst werden. Hierzu können graphische Benutzerschnittstellen eingesetzt werden, mittels welcher die Anwendungsprozessbeschreibungen im vorgegebenen Rahmen, beispielswese mittels vorgegebener und anwählbarer Softwareparameter, erstellt oder geändert werden können. Die Anwendungsprozessbeschreibungen können jedoch auch beispielsweise durch einen Experten direkt in Software programmiert und als Programmbaustein zur Verfügung gestellt werden.

Zum Erstellen von ausführbaren Anwendungsprozessen können die Anwendungsprozessbeschreibungen beispielsweise automatisch kompiliert oder interpretiert werden, wodurch ausführbare Anwendungsprozessquellcodes entstehen, deren Ausführung die Anwendungsprozesse realisiert. Hierbei können Eigenschaften oder Typ der bestehenden Anwendungssoftware, insbesondere Schnittstellen zwischen Anwendungsprozessquellcodes, definiert bzw. berücksichtigt werden. Die so erstellten Anwendungsprozessquellcodes können daher in die bestehende Anwendungssoftware automatisch eingebunden werden.

Die Anwendungsprozessbeschreibungen oder die ausführbaren Anwendungsprozessquellcodes können als prozessbeschreibende Codes vorliegen der erstellt werden.

Die Anwendungssoftware realisiert gemäß einer Ausführungsform eine Laufzeitumgebung (Runtime Environment) für die Ausführung des ausführbaren Anwendungsprozessquellcodes.

Gemäß einem Aspekt betrifft die Erfindung ein Verfahren zum Bereitstellen eines Anwendungsprozesses auf einem Netzwerkprozessserver einer Netzwerkserver-Infrastruktur, mit Auswählen einer Anwendungsprozessbeschreibung aus einer Anzahl von Anwendungsprozessbeschreibungen, um eine ausgewählte Anwendungsprozessbeschreibung zu erhalten, wobei die Anzahl von Anwendungsprozessbeschreibungen, also genau einer oder einer Mehrzahl von Anwendungsprozessbeschreibungen, auf einem Netzwerkdatenserver bereitgestellt ist und wobei jede Anwendungsprozessbeschreibung einen Anwendungsprozess definiert, Bereitstellen eines ausführbaren Anwendungsprozessquellcodes, welcher der ausgewählten Anwendungsprozessbeschreibung zugeordnet ist, und Übertragen des ausführbaren Anwendungsprozessquellcodes oder der ausgewählten Anwendungsprozessbeschreibung zu dem Netzwerkprozessserver über ein Kommunikationsnetzwerk, um den Anwendungsprozess auf dem Netzwerkprozessserver bereitzustellen.

Unter dem Begriff "Netzwerkserver-Infrastruktur" wird eine Informationstechnologie-Infrastruktur verstanden, welche einen Betreib des Netzwerkprozessservers und/oder des Netzwerkdatenservers in einem Netzwerk ermöglicht. Die Netzwerkserver-Infrastruktur kann eine Cloud-Processing-Infrastruktur sein. Der Netzwerkdatenserver kann gemäß einer Ausführungsform ebenfalls ein Element der Netzwerkserver-Infrastruktur sein. Gemäß einer weiteren Ausführungsform kann der Netzwerkserver ein Element einer anderen Netzwerkserver-Infrastruktur, beispielsweise einer anderen Cloud-Prozessing-Infrastruktur, sein.

Die Datenverarbeitungsanlage ist gemäß einer Ausführungsform kein Element der vorstehend genannten Netzwerkserver-Infrastruktur.

Zum Bereitstellen des ausführbaren Anwendungsprozessquellcodes kann die ausgewählte Anwendungsprozessbeschreibung kompiliert oder interpretiert werden. Gemäß einer Ausführungsform können die Anwendungsprozessquellcodes jedoch vorkonfiguriert mit den Anwendungsprozessbeschreibungen als kompilierte oder interpretierte Softwaredateien vorliegen.

Zur Übertragung des ausführbaren Anwendungsprozessquellcodes oder der ausgewählten Anwendungsprozessbeschreibung zu dem Netzwerkprozessserver kann beispielsweise das Internet-Protokoll oder das HTTP-Protokoll herangezogen werden.

Die Anwendungsprozessbeschreibungen können beispielsweise als uninterpretierte oder unkompilierte Softwarecodes vorliegen, welche mittels einer graphischen Benutzerschnittstelle beispielsweise direkt auf dem Netzwerkprozessserver angepasst werden können. Hierzu können beispielsweise Schnittstellen zu anderen Anwendungsprozessen bzw. Anwendungsprozessquellcodes definiert oder weitere Eingabe- oder Ausgabeparameter definiert werden. Die graphische Benutzerschnittstelle kann beispielsweise vordefinierte Parameterfelder umfassen, deren Anklicken die gewünschte Änderung bewirkt.

Gemäß einer Ausführungsform umfasst das Verfahren ferner das Anzeigen der Anzahl von Anwendungsprozessbeschreibungen, insbesondere mittels einer graphischen Benutzerschnittstelle oder eines Browsers. Zum Anzeigen der Anzahl von Anwendungsprozessbeschreibungen kann beispielsweise eine Datenverarbeitungsanlage eines Unternehmens eine Kommunikationsverbindung zu dem Netzwerkdatenserver aufbauen, wobei die graphische Benutzerschnittstelle oder der Browser auf der Datenverarbeitungsanlage ausgeführt werden. So müssen die Anwendungsprozessbeschreibungen für die Auswahl nicht von dem Netzwerkdatenserver heruntergeladen werden.

Gemäß einer Ausführungsform umfasst das Auswählen der Anwendungsprozessbeschreibung eine Übertragung eines Auswahlsignals, das die ausgewählte Anwendungsprozessbeschreibung anzeigt, und zu dem Netzwerkdatenserver über ein Kommunikationsnetzwerk überträgt. Das Auswahlsignal kann ein elektronisches Auswahlsignal sein, das dem Netzwerkdatenserver die ausgewählte Anwendungsprozessbeschreibung und den ausgewählten Anwendungsprozess anzeigt. Das Auswahlsignal kann beispielsweise durch ein Anklicken eines Auswahlfeldes in einem Browser erzeugt werden, welcher auf einer Datenverarbeitungsanlage ausgeführt wird. Das Auswahlsignal zwischen der Datenverarbeitungsanlage und dem Netzwerkdatenserver kann über ein Kommunikationsnetzwerk, beispielsweise über Internet, übertragen werden.

Gemäß einer Ausführungsform umfasst das Bereitstellen des ausführbaren Anwendungsprozessquellcodes das Erzeugen des Anwendungsprozessquellcodes, insbesondere das automatische Erzeugen des Anwendungsprozessquellcodes mittels eines Softwareprogramms anhand der ausgewählten Anwendungsprozessbeschreibung. Hierzu können die Anwendungsprozessbeschreibungen in einer Form vorliegen, welche die automatische Erzeugung des Anwendungsprozessquellcodes ermöglicht.

Gemäß einer Ausführungsform wird die ausgewählte Anwendungsprozessbeschreibung mittels eines Kompilierers kompiliert oder mittels eines Interpreters verarbeitet, um den ausführbaren Anwendungsprozessquellcode zu erzeugen. Wird der ausführbare Anwendungsprozessquellcode mittels eines Kompilierers erzeugt, so entsteht eine ausführbare Datei, welche beispielsweise mittels eines Betriebssystems einer lokalen Datenverarbeitungsanlage ausgeführt werden kann. Wird zur Erzeugung des ausführbaren Anwendungsprozessquellcodes ein Interpreter herangezogen, so entsteht ein Anwendungsprozessquellcode, welcher mittels einer geeigneten und beispielsweise betriebssystemunabhängigen Software ausgeführt werden kann.

Gemäß einer Ausführungsform wird der ausführbare Anwendungsprozessquellcode anhand der ausgewählten Anwendungsprozessbeschreibung auf dem Netzwerkdatenserver erzeugt. Hierzu kann die ausgewählte Anwendungsprozessbeschreibung auf dem Netzwerkdatenserver kompiliert oder interpretiert werden.

Gemäß einer Ausführungsform wird der ausführbare Anwendungsprozessquellcode von dem Netzwerkdatenserver über ein Kommunikationsnetzwerk zu einer Datenverarbeitungsanlage oder zum dem Netzwerkprozessserver übertragen. Die Datenverarbeitungsanlage ist beispielsweise eine lokale Datenverarbeitungsanlage, welche kein Element der vorstehend genannten Netzwerkserver-Infrastruktur ist. Die Datenverarbeitungsanlage und der Netzwerkprozessserver bzw. der Netzwerkdatenserver können an unterschiedlichen Orten und voneinander beabstandet angeordnet sein.

Durch die Übertragung des ausführbaren Anwendungsquellcodes zu der Datenverarbeitungsanlage kann der ausführbare Anwendungsquellcode auf dieser beispielsweise getestet werden. Der ausführbare Anwendungsprozessquellcode kann jedoch unmittelbar zu dem Netzwerkprozessserver über ein Kommunikationsnetzwerk übertragen und auf dem Netzwerkprozessserver beispielsweise in die bestehende Anwendungssoftware, z.B. in eine Laufzeitumgebung, eingebunden werden.

Gemäß einer Ausführungsform wird die ausgewählte Anwendungsprozessbeschreibung von dem Netzwerkdatenserver über ein Kommunikationsnetzwerk zu einer Datenverarbeitungsanlage übertragen, und der ausführbare Anwendungsprozessquellcode wird auf der Datenverarbeitungsanlage mittels des Kompilierers oder des Interpreters erzeugt. Die ausgewählte Anwendungsprozessbeschreibung kann beispielsweise kopiergesichert sein, was mit Hilfe des digitalen Rechtemanagements durchgeführt werden kann. Dadurch wird sichergestellt, dass die ausgewählte Anwendungsbeschreibung auf der lokalen Datenverarbeitungsanlage des Unternehmens nicht zum Zwecke der Vervielfältigung kopiert werden kann.

Gemäß einer Ausführungsform wird die ausgewählte Anwendungsprozessbeschreibung von dem Netzwerkdatenserver über ein Kommunikationsnetzwerk zu der Datenverarbeitungsanlage über einen verschlüsselten Kommunikationskanal übertragen. Der Kommunikationskanal kann in an sich bekannter Weise verschlüsselt oder als VPN-Verbindung aufgebaut sein. Dadurch wird sichergestellt, dass die übertragene Anwendungsprozessbeschreibung nicht abgegriffen werden kann.

Gemäß einer Ausführungsform kann die ausgewählte Anwendungsprozessbeschreibung oder ein ausführbarer Anwendungsprozesscode verschlüsselt oder zwecks Authentifizierung mit einer digitalen Signatur oder mit Check-Bits, welche eine Authentifizierungsinformation bereitstellen können, versehen werden.

Gemäß einer Ausführungsform wird der ausführbare Anwendungsprozessquellcode in einer Softwaretestumgebung der Datenverarbeitungsanlage ausgeführt, um den ausführbaren Anwendungsprozessquellcode zu verifizieren. Die Softwaretestumgebung kann beispielsweise eingerichtet sein, die Anwendungssoftware, welche auf dem Netzwerkprozessserver ausgeführt wird, zu emulieren, um den ausführbaren Anwendungsprozessquellcode zu verifizieren. Hierbei können insbesondere das Eingangs- und das Ausgangsverhalten sowie die Schnittstellen zu anderen Anwendungsprozessen verifiziert werden.

Gemäß einer Ausführungsform ist die Softwaretestumgebung ein geschlossenes Softwaresystem, insbesondere ein für einen Benutzer der Datenverarbeitungsanlage oder für Softwareprozesse der Datenverarbeitungsanlage unzugängliches Softwaresystem. Das Softwaresystem kann ein geschlossenes Eco-Softwaresystem sein, wodurch sichergestellt wird, dass die Benutzer der Datenverarbeitungsanlage auf den ausführbaren Anwendungsprozessquellcode nicht zugreifen können.

Gemäß einer Ausführungsform wird der ausführbare Anwendungsprozessquellcode von der Datenverarbeitungsanlage über ein Kommunikationsnetzwerk zu dem Netzwerkprozessserver übertragen. Hierzu kann die Datenverarbeitungsanlage eine Kommunikationsverbindung über ein Kommunikationsnetzwerk, beispielsweise Internet, zu dem Netzwerkprozessserver aufbauen. Somit kann der Zeitpunkt des Uploads des ausführbaren Anwendungsprozessquellcodes frei bestimmt werden.

Gemäß einer Ausführungsform wird die ausgewählte Anwendungsprozessbeschreibung von dem Netzwerkdatenserver über ein Kommunikationsnetzwerk zu dem Netzwerkprozessserver übertragen, und der ausführbare Anwendungsprozessquellcode wird auf dem Netzwerkprozessserver mittels des Kompilierers oder des Interpreters erzeugt. Ist auf dem Netzwerkprozessserver bereits die Anwendungssoftware installiert, in die der ausführbare Anwendungsprozessquellcode eingebettet werden soll, so kann der Netzwerkprozessserver beim Kompilieren oder beim Interpretieren der ausgewählten Anwendungsprozessbeschreibung die Eigenschaften der installierten Anwendungssoftware effizient und automatisch berücksichtigen.

Gemäß einer Ausführungsform beschreibt die ausgewählte Anwendungsprozessbeschreibung eine Mehrzahl von Sub-Prozessen, wobei die Sub-Prozesse gemeinsam den Anwendungsprozess implementieren, und im Schritt des Erzeugens des ausführbaren Anwendungsprozessquellcodes wird eine Anzahl von Sub-Prozessen als separate Sub-Quellcodes erzeugt und bereitgestellt, oder der ausführbare Anwendungsprozessquellcode wird als ein einziger Quellcode erzeugt, um den Anwendungsprozess zu implementieren. Bei den Sub-Prozessen kann es sich beispielsweise um Unterfunktionen des Anwendungsprozesses handeln, welche beispielsweise separat kompiliert und bereitgestellt werden. Dadurch kann beispielsweise die zeitliche Ablaufreihenfolge der Sub-Prozesse innerhalb des Anwendungsprozesses beliebig gestaltet werden.

Gemäß einer Ausführungsform wird der ausführbare Anwendungsprozessquellcode in eine Anwendungssoftware auf dem Netzwerkprozessserver eingebettet. Die Anwendungssoftware kann beispielsweise als ein ausführbares Prozessanwendungsprogramm gestaltet sein.

Gemäß einer Ausführungsform wird der ausführbare Anwendungsprozessquellcode auf dem Netzwerkprozessserver ausgeführt. Hierzu kann der Netzwerkprozessserver beispielsweise den ausführbaren Anwendungsprozessquellcode in die vorstehend genannte Anwendungssoftware einbetten und die Anwendungssoftware ausführen. Gemäß einer Ausführungsform kann der Netzwerkprozessserver ausschließlich den ausführbaren Anwendungsprozessquellcode ausführen.

Gemäß einer Ausführungsform umfasst das Verfahren das Übertragen einer graphischen Anzeigeinformation von dem Netzwerkdatenserver zu einer Datenverarbeitungsanlage über ein Kommunikationsnetzwerk zum Anzeigen der Anzahl von auswählbaren Anwendungsprozessbeschreibungen, das Übertragen eines Auswahlsignals von der Datenverarbeitungsanlage zu dem Netzwerkdatenserver zum Auswählen der ausgewählten Anwendungsprozessbeschreibung, ansprechend auf einen Empfang des Auswahlsignals durch den Netzwerkdatenserver, das Übertragen der ausgewählten Anwendungsprozessbeschreibung zu der Datenverarbeitungsanlage über das Kommunikationsnetzwerk und das Erzeugen des ausführbaren Anwendungsprozessquellcodes mittels eines Softwareprogramms auf der Datenverarbeitungsanlage, um den ausführbaren Anwendungsprozessquellcode bereitzustellen, oder das Übertragen des ausführbaren Anwendungsprozessquellcodes von dem Netzwerkdatenserver zu der Datenverarbeitungsanlage über das Kommunikationsnetzwerk, um den ausführbaren Anwendungsprozessquellcode bereitzustellen, das Ausführen des ausführbaren Anwendungsprozessquellcodes mittels der Datenverarbeitungsanlage, um den ausführbaren Anwendungsprozessquellcode zu überprüfen, das Übertragen des ausführbaren Anwendungsprozessquellcodes von der Datenverarbeitungsanlage zu dem Netzwerkprozessserver über ein Kommunikationsnetzwerk, und das Ausführen des ausführbaren Anwendungsprozessquellcodes auf dem Netzwerkprozessserver oder das Einbinden des ausführbaren Anwendungsprozessquellcodes in eine Anwendungssoftware auf dem Netzwerkprozessserver, welche beispielsweise einem Benutzer der Datenverarbeitungsanlage zugeordnet ist.

Gemäß einer Ausführungsform ist die Anzahl von Anwendungsprozessbeschreibungen in einer Datenbank elektronisch gespeichert, welche eine Anwendungsbibliothek realisiert, und die Anwendungsprozessbeschreibung wird aus der Anwendungsbibliothek ausgewählt. Die Anwendungsprozessbeschreibungen können gemäß einer Ausführungsform der Datenbank beispielsweise durch Upload zu dem Netzwerkdatenserver hinzugefügt werden.

Die Datenbank kann ein Verzeichnis mit horizontalen und/oder vertikalen Geschäfts- bzw. Anwendungsprozessen bereitstellen.

Gemäß einer Ausführungsform umfasst das Verfahren ferner eine Änderung der ausgewählten Anwendungsprozessbeschreibung nach der Auswahl, um eine geänderte Anwendungsprozessbeschreibung zu erhalten, und die geänderte Anwendungsprozessbeschreibung wird als die ausgewählte Anwendungsprozessbeschreibung gehandhabt. Die Änderung der ausgewählten Anwendungsprozessbeschreibung kann beispielsweise direkt auf dem Netzwerkdatenserver vorgenommen werden. Hierzu kann beispielsweise eine graphische Benutzerschnittstelle mit vorgegebenen Änderungsfeldern bereitgestellt werden, deren Anklicken eine gewünschte Änderung oder eine Funktion hinzufügt oder entfernt. So kann beispielsweise das Verhalten des jeweiligen Anwendungsprozesses an die bestehende Anwendungssoftware angepasst werden. Hierzu können beispielsweise Felder vorgesehen sein, welche unterschiedliche Anwendungssoftwaretypen anzeigen, so dass durch ein Anklicken eines Feldes die Anwendungsprozessbeschreibung an den jeweiligen Anwendungssoftwaretyp angepasst wird. Darüber hinaus können auf diese Weise mehrere Anwendungsprozessbeschreibungen miteinander verknüpft werden. Dadurch können ferner automatisch Schnittstellen zu anderen Anwendungsprozessbeschreibungen bzw. Anwendungsprozessen erzeugt werden.

Gemäß einer Ausführungsform erfolgt eine Kategorisierung/Taxonomie (Sales, Production, Branche, Unternehmensgröße) oder ein Tagging. Die Verwendung von Ontologie beim Suchvorgang hilft, präzisere Treffermengen zu erzielen und eine sprachliche Unabhängigkeit zu schaffen.

Gemäß einem Aspekt betrifft die Erfindung ein Verfahren zum Bereitstellen eines ausführbaren Anwendungsprozessquellcodes auf einem Netzwerkdatenserver, mit Bereitstellen einer Anzahl von Anwendungsprozessbeschreibungen auf dem Netzwerkdatenserver, wobei jede Anwendungsprozessbeschreibung einen Anwendungsprozess definiert, Empfangen eines Auswahlsignals über ein Kommunikationsnetzwerk durch den Netzwerkdatenserver, wobei das Auswahlsignal eine ausgewählte Anwendungsprozessbeschreibung der Anzahl der Anwendungsprozessbeschreibungen anzeigt, und Erzeugen eines ausführbaren Anwendungsprozessquellcodes anhand der ausgewählten Anwendungsprozessbeschreibung ansprechend auf das Empfangen des Auswahlsignals. Das Auswahlsignal kann beispielsweise von der vorgenannten Datenverarbeitungsanlage stammen.

Gemäß einer Ausführungsform wird der ausführbare Anwendungsprozessquellcode durch den Netzwerkdatenserver für die Übertragung über das Kommunikationsnetzwerk, insbesondere für einen Download, bereitgestellt.

Gemäß einer Ausführungsform wird der ausführbare Anwendungsprozessquellcode über das Kommunikationsnetzwerk ausgesendet, insbesondere zu einer Datenverarbeitungsanlage oder an eine Kommunikationsnetzwerkadresse ausgesendet.

Gemäß einer Ausführungsform umfasst der Schritt des Erzeugens des ausführbaren Anwendungsprozessquellcodes das automatische Kompilieren oder das automatische Interpretieren der ausgewählten Anwendungsprozessbeschreibung.

Gemäß einer Ausführungsform umfasst der Schritt des Bereitstellens das Anzeigen von Eigenschaften der Anzahl der Anwendungsprozessbeschreibungen.

Gemäß einer Ausführungsform umfasst der Schritt des Bereitstellens das Anzeigen einer elektronischen Liste mit der Anzahl der Anwendungsprozessbeschreibungen oder das Bereitstellen der Anzahl der Anwendungsprozessbeschreibungen für eine Anzeige, insbesondere mittels eines Browsers.

Gemäß einer Ausführungsform wird die elektronische Liste als eine Datei, insbesondere als eine HTML- oder eine XML-Datei, durch den Netzwerkdatenserver über das Kommunikationsnetzwerk ausgesendet.

Gemäß einer Ausführungsform wird die elektronische Liste ansprechend auf einen Empfang einer Aufforderung zum Aussenden der elektronischen Liste über das Kommunikationsnetzwerk ausgesendet.

Gemäß einer Ausführungsform wird die ausgewählte Anwendungsprozessbeschreibung auf dem Datenserver geändert, um eine geänderte Anwendungsprozessbeschreibung zu erhalten, welche als die ausgewählte Anwendungsprozessbeschreibung gehandhabt wird. Dadurch können die nachfolgenden Verfahrensschritte ohne Anpassungen ausgeführt werden.

Gemäß einer Ausführungsform wird die ausgewählte Anwendungsprozessbeschreibung mittels einer graphischen Benutzerschnittstelle, insbesondere einer graphischen Benutzerschnittstelle mit vorgegebenen Parametern, geändert. Dabei kann insbesondere eine Schnittstelle der auswählbaren Anwendungsbeschreibung, welche einen Anwendungsprozess definiert, zu einem anderen Anwendungsprozess erzeugt oder angepasst werden.

Gemäß einer Ausführungsform wird die Anzahl der Anwendungsprozessbeschreibungen durch eine Datenbank des Netzwerkdatenservers bereitgestellt.

Gemäß einer Ausführungsform umfasst das Verfahren den Schritt des Empfangens einer Anwendungsprozessbeschreibung über ein Kommunikationsnetzwerk durch den Netzwerkdatenserver.

Gemäß einer Ausführungsform wird die empfangene Anwendungsprozessbeschreibung der Anzahl der Anwendungsprozessbeschreibungen hinzugefügt, insbesondere in einer Datenbank des Netzwerkdatenservers, in welcher die Anzahl der Anwendungsprozessbeschreibungen gespeichert ist.

Gemäß einem weiteren Aspekt betrifft die Erfindung einen Netzwerkdatenserver zum Bereitstellen eines ausführbaren Anwendungsprozessquellcodes, welcher eingerichtet ist, das erfindungsgemäße Verfahren zum Bereitstellen eines ausführbaren Anwendungsprozessquellcodes auszuführen.

Gemäß einer Ausführungsform umfasst der Netzwerkdatenserver einen Speicherbereich, insbesondere einer Datenbank zum Bereitstellen einer Anzahl von Anwendungsprozessbeschreibungen auf dem Netzwerkdatenserver, wobei jede Anwendungsprozessbeschreibung einen Anwendungsprozess definiert, eine Kommunikationsschnittstelle zum Kommunizieren über das Kommunikationsnetzwerk, wobei die Netzwerkkommunikationsschnittstelle ausgebildet ist, das Auswahlsignal zu empfangen, und einen Prozessor zum Erzeugen des ausführbaren Anwendungsprozessquellcodes anhand der ausgewählten Anwendungsprozessbeschreibung ansprechend auf das Empfangen des Auswahlsignals.

Gemäß einer Ausführungsform ist die Kommunikationsschnittstelle ausgebildet, den ausführbaren Anwendungsprozessquellcode über das Kommunikationsnetzwerk an eine Kommunikationsnetzwerkadresse auszusenden.

Gemäß einer Ausführungsform umfasst der Prozessor einen Kompilierer oder einen Interpreter zum Erzeugen des ausführbaren Anwendungsprozessquellcodes.

Gemäß einer Ausführungsform ist der Prozessor ausgebildet, eine graphische Benutzerschnittstelle zum Ändern der ausgewählten Anwendungsbeschreibung gemäß zumindest einem vorgegebenen, insbesondere auswählbaren Parameter, zu implementieren, insbesondere um eine Schnittstelle der auswählbaren Anwendungsbeschreibung, welche einen Anwendungsprozess definiert, zu einem anderen Anwendungsprozess zu schaffen.

Gemäß einer Ausführungsform ist der Prozessor ausgebildet, die ausgewählte Anwendungsprozessbeschreibung gemäß einem vorgegebenen Parameter zu ändern und die geänderte Anwendungsprozessbeschreibung als die ausgewählte Anwendungsprozessbeschreibung zu handhaben.

Gemäß einer Ausführungsform ist der Speicherbereich über das Kommunikationsnetzwerk zum Anzeigen oder Auswählen der Anwendungsprozessbeschreibung erreichbar oder addressierbar.

Gemäß einer Ausführungsform ist der Speicherbereich oder der Prozessor ausgebildet, eine anzeigbare elektronische Liste mit der Anzahl der Anwendungsprozessbeschreibungen bereitzustellen.

Gemäß einer Ausführungsform ist der Prozessor ausgebildet, den ausführbaren Anwendungsprozesscode auszuführen.

Gemäß einem weiteren Aspekt betrifft die Erfindung ein Verfahren zum Bereitstellen eines ausführbaren Anwendungsprozessquellcodes auf einem Netzwerkprozessserver einer Netzwerkserver-Infrastruktur, mit Empfangen des ausführbaren Anwendungsprozessquellcodes durch den Netzwerkprozessserver über ein Kommunikationsnetzwerk, und Einbinden des ausführbaren Anwendungsprozessquellcodes in eine Anwendungssoftware auf dem Netzwerkprozessserver.

Gemäß einer Ausführungsform ist die Anwendungssoftware eine Laufzeitumgebung mit modular einbindbaren, ausführbaren Anwendungsprozessquellcodes, wobei der ausführbare Anwendungsprozessquellcode im Schritt des Einbindens als ausführbare Datei auf dem Netzwerkprozessserver gespeichert, insbesondere innerhalb der Laufzeitumgebung gespeichert wird.

Gemäß einer Ausführungsform umfasst der ausführbare Anwendungsprozessquellcode eine Schnittstelle zu einem anderen ausführbare Anwendungsprozessquellcode oder zu der Anwendungssoftware, wobei in dem Schritt des Einbindens der ausführbare Anwendungsprozessquellcode über die Schnittstelle mit dem anderen ausführbaren Anwendungsprozessquellcode verbunden oder in die Anwendungssoftware eingebunden wird.

Gemäß einer Ausführungsform ist die Anwendungssoftware eine Laufzeitumgebung zur Ausführung des ausführbaren Anwendungsprozessquellcodes, wobei in dem Schritt des Einbindens des ausführbaren Anwendungsprozessquellcodes automatisch ein Eintrag über den ausführbaren Anwendungsprozessquellcode in der Laufzeitumgebung erzeugt wird.

Gemäß einer Ausführungsform wird der ausführbare Anwendungsprozessquellcode auf dem Netzwerkprozessserver ausgeführt.

Gemäß einer Ausführungsform wird der ausführbare Anwendungsprozessquellcode auf dem Netzwerkprozessserver ausgeführt, wobei ein Ergebnis der Ausführung des ausführbaren Anwendungsprozessquellcode über das Kommunikationsnetzwerk ausgesendet wird, insbesondere an eine vorbestimmte Kommunikationsnetzwerkadresse.

Gemäß einer Ausführungsform umfasst das Verfahren die folgenden Schritte: Empfangen eines Ausführungsbefehls zur Ausführung des ausführbaren Anwendungsquellcodes oder der Anwendungssoftware durch den Netzwerkprozessserver über das Kommunikationsnetzwerk, insbesondere von einer vorbestimmten Kommunikationsnetzwerkadresse, und Ausführen des ausführbaren Anwendungsquellcodes oder der Anwendungssoftware ansprechend auf den Empfang des Ausführungsbefehls.

Gemäß einer Ausführungsform ist die Netzwerk-Infrastruktur eine Cloud-Processing-Infrastruktur, wobei das Verfahren mittels des Netzwerkprozessservers der Cloud-Processing-Infrastruktur ausgeführt wird.

Gemäß einem Aspekt betrifft die Erfindung einen Netzwerkprozessserver, welcher ausgebildet ist, das Verfahren zum Bereitstellen eines ausführbaren Anwendungsprozessquellcodes auszuführen.

Gemäß einer Ausführungsform umfasst der Netzwerkprozessserver eine Kommunikationsschnittstelle zum Empfangen des ausführbaren Anwendungsprozessquellcodes über ein Kommunikationsnetzwerk, und einen Prozessor zum Einbinden des ausführbaren Anwendungsprozessquellcodes in eine Anwendungssoftware auf dem Netzwerkprozessserver.

Gemäß einer Ausführungsform ist die Anwendungssoftware eine Laufzeitumgebung zur Ausführung des ausführbaren Anwendungsprozessquellcodes, wobei der Prozessor ausgebildet ist, den ausführbaren Anwendungsprozessquellcode mittels der Laufzeitumgebung auszuführen.

Gemäß einer Ausführungsform ist die Kommunikationsschnittstelle ausgebildet, ein Ausführungsergebnis der Ausführung des ausführbaren Anwendungsprozessquellcodes über das Kommunikationsnetzwerk an eine Kommunikationsnetzwerkadresse auszusenden.

Gemäß einer Ausführungsform ist die Kommunikationsschnittstelle ausgebildet, einen Ausführungsbefehl zur Ausführung des ausführbaren Anwendungsquellcodes oder der Anwendungssoftware durch den Netzwerkprozessserver über das Kommunikationsnetzwerk, insbesondere von einer vorbestimmten Kommunikationsnetzwerkadresse, zu empfangen, und der Prozessor ist ausgebildet, den ausführbaren Anwendungsquellcode oder die Anwendungssoftware ansprechend auf den Empfang des Ausführungsbefehls auszuführen.

Gemäß einem weiteren Aspekt betrifft die Erfindung ein Netzwerkserversystem zum Bereitstellen eines Anwendungsprozesses, mit einem Netzwerkprozessserver einer Netzwerkserver-Infrastruktur und einem Netzwerkdatenserver, wobei der Netzwerkdatenserver eingerichtet ist, eine Anzahl von Anwendungsprozessbeschreibungen bereitzustellen, wobei jede Anwendungsprozessbeschreibung einen Anwendungsprozess definiert, wobei der Netzwerkdatenserver ferner eingerichtet ist, über ein Kommunikationsnetzwerk ein Auswahlsignal zu empfangen, das eine ausgewählte Anwendungsprozessbeschreibung anzeigt, und ansprechend auf den Empfang des Auswahlsignals die ausgewählte Anwendungsprozessbeschreibung oder einen der ausgewählten Anwendungsprozessbeschreibung zugeordneten ausführbaren Anwendungsprozessquellcodes über ein Kommunikationsnetzwerk zu der Datenverarbeitungsanlage oder zu dem Netzwerkprozessserver auszusenden, wobei der Netzwerkprozessserver ausgebildet ist, die ausgewählte Anwendungsprozessbeschreibung oder den ausführbaren Anwendungsprozessquellcode über ein Kommunikationsnetzwerk von der Datenverarbeitungsanlage oder von dem Netzwerkdatenserver zu empfangen, um den Anwendungsprozess auf dem Netzwerkprozessserver bereitzustellen. Der Netzwerkdatenserver sowie dessen Funktionalität und der Netzwerkprozessserver sowie dessen Funktionalität können beispielsweise die vorstehend und die nachstehend beschriebenen Merkmale aufweisen.

Gemäß einer Ausführungsform umfassen der Netzwerkprozessserver und/oder der Netzwerkdatenserver einen Kompilierer oder einen Interpreter zum Erzeugen des ausführbaren Anwendungsprozessquellcodes anhand der ausgewählten Anwendungsprozessbeschreibung.

Gemäß einer Ausführungsform ist der Netzwerkprozessserver ausgebildet, den ausführbaren Anwendungsprozessquellcode auszuführen.

Gemäß einer Ausführungsform ist der Netzwerkdatenserver ausgebildet, die ausgewählte Anwendungsprozessbeschreibung und/oder den ausführbaren Anwendungsprozessquellcode gegen Vervielfältigung zu sichern, insbesondere mittels eines digitalen Rechtemanagements zu sichern.

Gemäß einer Ausführungsform ist die Netzwerkserver-Infrastruktur eine Cloud-Processing-Infrastruktur.

Gemäß einer Ausführungsform ist das Netzwerkserversystem ausgebildet, insbesondere programmtechnisch eingerichtet, das erfindungsgemäße Verfahren auszuführen.

Gemäß einer Ausführungsform umfasst die Erfindung ein Computerprogramm mit einem Programmcode, das das erfindungsgemäße Verfahren implementiert. Das Computerprogramm kann mehrere Programmcodes aufweisen, welche verteilt beispielsweise auf dem Netzwerkdatenserver und/oder auf dem Netzwerkprozessserver ausgeführt werden. Das Computerprogramm kann ferner einen Programmcode umfassen, welcher auf der vorstehend genannten Datenverarbeitungsanlage ausgeführt wird.

Weitere Ausführungsbeispiele werden Bezug nehmend auf die beiliegenden Zeichnungen näher erläutert. Es zeigen:
- Fig. 1: ein Blockdiagramm eines Netzwerkserversystems zum Bereitstellen eines Anwendungsprozesses;
- Fig. 2: ein Ablaufdiagramm eines Verfahrens zum Bereitstellen eines Anwendungsprozesses;
- Fig. 3: ein Blockdiagramm eines Netzwerkserversystems;
- Fig. 4: ein Ablaufdiagramm eines Verfahrens zum Bereitstellen eines ausführbaren Anwendungsprozessquellcodes auf einem Netzwerkdatenserver;
- Fig. 5: ein Blockdiagramm eines Netzwerkdatenservers;
- Fig. 6: ein Ablaufdiagramm eines Verfahren zum Bereitstellen eines ausführbaren Anwendungsprozessquellcodes auf einem Netzwerkprozessserver; und
- Fig. 7: ein Blockdiagramm eines Netzwerkprozessservers.

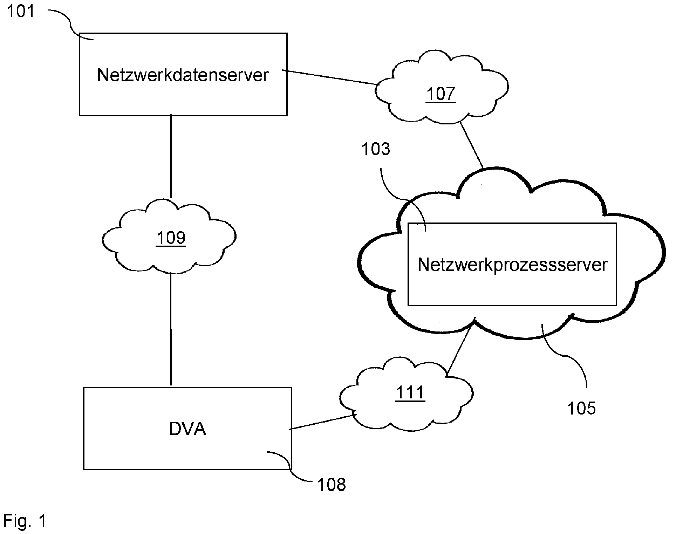

Fig. 1 zeigt ein Netzwerkserversystem zum Bereitstellen eines Anwendungsprozesses. Das Netzwerkserversystem umfasst einen Netzwerkdatenserver 101 sowie einen Netzwerkprozessserver 103. Der Netzwerkprozessserver 103 kann beispielsweise in einer Netzwerkinfrastruktur 105 angeordnet sein. Die Netzwerkinfrastruktur 105 kann eine Cloud-Processing-Infrastruktur sein.

Der Netzwerkdatenserver 101 und der Netzwerkprozessserver 103 können in unterschiedlichen Netzwerkinfrastrukturen angeordnet sein. Gemäß einer Ausführungsform kann der Netzwerkdatenserver 101 jedoch auch innerhalb derselben Netzwerkinfrastruktur 105 angeordnet sein.

Gemäß einer Ausführungsform können der Netzwerkdatenserver 101 sowie der Netzwerkprozessserver 103 über ein Kommunikationsnetzwerk 107 miteinander kommunizieren.

Der Netzwerkdatenserver 101 ist eingerichtet, eine Anzahl von Anwendungsprozessbeschreibungen bereitzustellen, wobei jede Anwendungsprozessbeschreibung einen Anwendungsprozess definiert. Der Netzwerkprozessserver 103 ist vorgesehen, einen Anwendungsquellcode bereitzustellen und auszuführen, um einen Anwendungsprozess zu realisieren. Der Anwendungsprozess kann einer der genannten Anwendungsprozesse sein.

Die Anzahl von Anwendungsprozessbeschreibungen kann in einer Datenbank des Netzwerkdatenservers 101 abgelegt und auswählbar sein. Hierzu kann beispielsweise eine Datenverarbeitungsanlage 108 über ein Kommunikationsnetzwerk 109 auf den Netzwerkdatenserver 101 bzw. auf dessen Netzwerkdatenbank zugreifen, um eine Anwendungsprozessbeschreibung auszuwählen. Hierzu kann die Datenverarbeitungsanlage 108 beispielsweise einen Browser ausführen, über welchen eine Kommunikation zu den Netzwerkdatenserver 101 bewirkt werden kann.

Die Anwendungsprozessbeschreibungen können jeweils einzeln anwählbar sein, wobei durch ein Anwählen bzw. Auswählen der Anwendungsprozessbeschreibung beispielsweise durch einen Benutzer der Datenverarbeitungsanlage 108 diese ausgewählt wird. Ansprechend hierauf kann ein Auswahlsignal von der Datenverarbeitungsanlage 108 über das Kommunikationsnetzwerk 109 zu dem Netzwerkdatenserver 101 übertragen werden. Ansprechend auf einen Empfang des Auswahlsignals übermittelt der Netzwerkdatenserver 101 beispielsweise die ausgewählte Anwendungsprozessbeschreibung oder einen der ausgewählten Anwendungsprozessbeschreibung zugeordneten ausführbaren Anwendungsprozessquellcode, welcher den gewünschten Anwendungsprozess realisiert, entweder über das Kommunikationsnetzwerk 109 zu der Datenverarbeitungsanlage 108 oder über das Kommunikationsnetzwerk 107 direkt zu dem Netzwerkprozessserver 103.

Wird die ausführbare Anwendungsprozessbeschreibung oder wird der ausführbare Anwendungsprozessquellcode zu der Datenverarbeitungsanlage 108 übermittelt, so kann dort die übermittelte Software getestet bzw. verifiziert werden. Hierzu kann die Datenverarbeitungsanlage 108 die Laufzeitumgebung des Netzwerkprozessservers emulieren, welche zur Ausführung der Anwendungsprozesscodes verwendet wird. Hiernach kann die Datenverarbeitungsanlage 108 über das Kommunikationsnetzwerk 111 entweder die ausgewählte Anwendungsprozessbeschreibung oder den Anwendungsprozessquellcode zu dem Netzwerkprozessserver 103 über das Kommunikationsnetzwerk 111 übermitteln.

Gemäß einer Ausführungsform kann der Netzwerkdatenserver 101 die ausführbaren Anwendungsquellcodes in einer Bibliothek bereitstellen, welche durch eine Datenbank realisiert wird. Den ausführbaren Anwendungsquellcodes können auswählbare Anwendungsprozessbeschreibungen zugeordnet sein, sodass ein Anwendungsquellcode bereits durch eine Auswahl einer Anwendungsprozessbeschreibung ausgewählt werden kann. Der Netzwerkdatenserver 101 kann jedoch einen Kompilierer und/oder einen Interpreter umfassen, um anhand der ausgewählten Anwendungsprozessbeschreibung einen zugehörigen Anwendungsprozessquellcode in an sich bekannter Weise zu erzeugen.

Gemäß einer Ausführungsform kann der Netzwerkprozessserver 103 einen Kompilierer oder Interpreter aufweisen. Dies ist besonders dann vorteilhaft, wenn die ausgewählte Anwendungsprozessbeschreibung direkt zu dem Netzwerkprozessserver 103 übermittelt wird, um dort den ausführbaren Anwendungsquellcode zu erzeugen. Der ausführbare Anwendungsquellcode kann beispielsweise automatisch in eine Anwendungssoftware eingebettet werden, welche durch den Netzwerkprozessserver 103 bereitgestellt ist.

Die Kommunikationsnetzwerke 107, 109 und 111 können Internet-Kommunikationsnetzwerke sein. Die Kommunikationsverbindungen können daher auf der Basis des Internet-Protokolls oder des HTTP-Protokolls implementiert werden. Der Zugang zu den Kommunikationsnetzwerken kann drahtlos oder drahtgebunden sein.

Gemäß einer Ausführungsform ist die Datenverarbeitungsanlage 108 kein Element des Netzwerkserversystems, sondern eine stationäre Datenverarbeitungsanlage, welche beispielsweise durch ein Unternehmen betrieben wird. Gemäß einer anderen Ausführungsform kann die Datenverarbeitungsanlage 108 ein Element des Netzwerkserversystems sein.

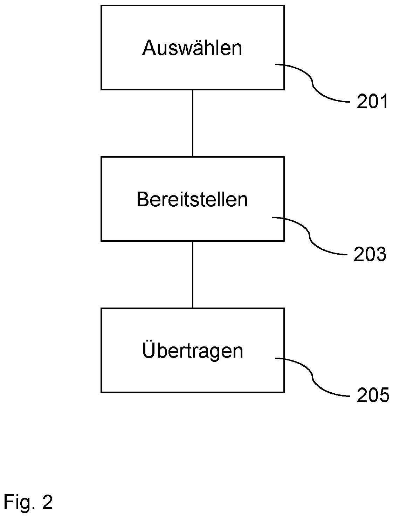

Das in Fig. 1 dargestellte Netzwerkserversystem kann beispielsweise eingerichtet sein, das in Fig. 2 dargestellte Verfahren auszuführen.

Das Verfahren umfasst das Auswählen 201 einer Anwendungsprozessbeschreibung aus einer Anzahl von Anwendungsprozessbeschreibungen, um eine ausgewählte Anwendungsprozessbeschreibung zu erhalten. Die Anzahl von Anwendungsprozessbeschreibungen kann beispielsweise auf dem Netzwerkdatenserver 101 bereitgestellt sein. Dabei definiert jede Anwendungsprozessbeschreibung gemäß einer Ausführungsform einen separaten Anwendungsprozess, welcher seinerseits beispielsweise aus einer Mehrzahl von Sub-Prozessen zusammengesetzt sein kann.

Das Verfahren umfasst ferner das Bereitstellen 203 eines ausführbaren Anwendungsprozessquellcodes, welcher der ausgewählten Anwendungsprozessbeschreibung zugeordnet ist. Der Schritt des Bereitstellens 203 kann beispielsweise das Kompilieren mittels eines Kompilierers (Compilers) oder das Interpretieren mittels eines Interpreters der ausgewählten Anwendungsprozessbeschreibung umfassen. Das Kompilieren oder das Interpretieren können beispielsweise auf dem Netzwerkdatenserver 101, auf dem Netzwerkprozessserver 103 oder auch auf der Datenverarbeitungsanlage 108 ausgeführt werden. Der Kompilierer und/oder der Interpreter können in Software realisiert werden.

Das Verfahren umfasst ferner das Übertragen 205 des ausführbaren Anwendungsprozessquellcodes oder der ausgewählten Anwendungsprozessbeschreibung zu dem Netzwerkprozessserver 103 über das Kommunikationsnetzwerk 111 oder 107, um den Anwendungsprozess aus dem Anwendungsserver bereitzustellen. Der Anwendungsprozess kann auf dem Anwendungsserver beispielsweise in die bestehende Anwendungssoftware integriert werden.

Die Anwendungsprozessbeschreibungen können beispielsweise gemäß dem in der Druckschrift EP 1 589 416 A2 beschriebenen Verfahren erzeugt bzw. bereitgestellt sein und/oder die dort beschriebenen Eigenschaften aufweisen. Diesbezüglich ist daher der Offenbarungsgehalt der Druckschrift EP 1 589 416 A2 dem Offenbarungsgehalt dieser Beschreibung zuzurechnen. Die Anwendungsprozessbeschreibungen können jedoch mittels jedes anderen Verfahrens realisiert und bereitgestellt werden. Hierbei können an sich bekannten Standardverfahren eingesetzt werden, welche zur Definierung und Erzeugung von Software eingesetzt werden.

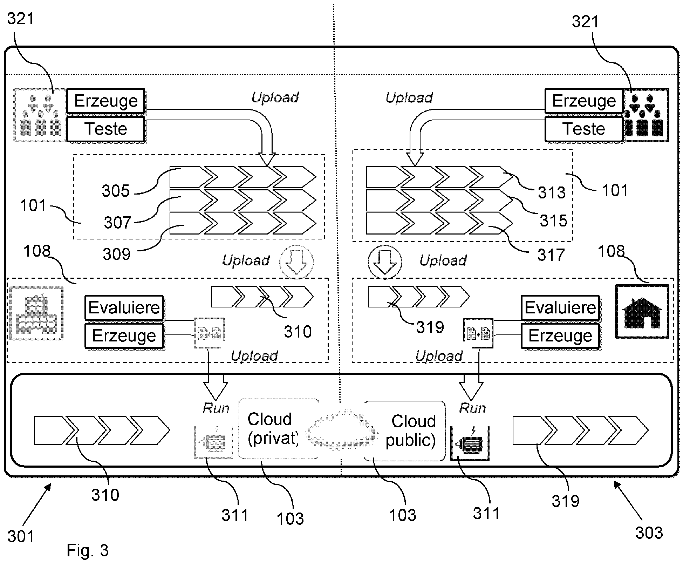

Das Verfahren sowie das Netzwerkserversystem zum Bereitstellen eines Anwendungsprozesses können gemäß einer Ausführungsform die ausführbaren Anwendungsprozessquellcodes gemäß einer der bekannten Open-Source-Lizenzen bereitstellen. Gemäß einer anderen Ausführungsform können das Verfahren sowie das Netzwerkserversystem vorgesehen sein, ausführbare Anwendungsprozessquellcodes bereitzustellen, welche keine Open-Source-Programme sind oder welche keinem Veröffentlichungszwang unterliegen. Diese Szenarien sind in Fig. 3 anhand des Netzwerkserversystems dargestellt.

Auf der linken Seite von Fig. 3 ist ein Szenario 301 dargestellt, bei dem die Anwendungsprozessquellcodes nicht veröffentlicht werden. Auf der rechten Seite in Fig. 3 ist hingegen ein Anwendungsszenario 303 dargestellt, bei dem die Anwendungsprozessquellcodes öffentlich zugänglich sind.

Bezug nehmend auf das erste Anwendungsszenario 301 kann der Netzwerkdatenserver Anwendungsprozessbeschreibungen 305, 307, 309 umfassen, welche beispielsweise für die Verkaufssteuerung, für das Controlling oder für die Beschaffung (Procurement) vorgesehen sind. Die Anwendungsprozessbeschreibungen können jeweils ausgewählt und beispielsweise bestellt oder gleich erworben werden.

Danach kann eine ausgewählte Anwendungsprozessbeschreibung oder ein dieser Anwendungsprozessbeschreibung zugeordneter Anwendungsprozessquellcode zu der lokalen Datenverarbeitungsanlage 108 über ein Kommunikationsnetzwerk übertragen werden (Download). Dort kann die ausgewählte Anwendungsprozessbeschreibung oder der entsprechende Anwendungsprozessquellcode getestet bzw. evaluiert werden, um festzustellen, ob die ausgewählte Anwendungsprozessbeschreibung bzw. der Anwendungsprozessquellcode den gewünschten Anwendungsprozess, beispielsweise Verkaufsverwaltung, realisiert.

Falls die Datenverarbeitungsanlage 108 keinen Anwendungsprozessquellcode empfangen hat, so kann mittels eines Kompilierers oder einer Interpreters, welcher auf der Datenverarbeitungsanlage 108 abläuft, anhand der ausgewählten Anwendungsprozessbeschreibung der ausführbare Anwendungsprozessquellcode 310 erzeugt, ggf. verifiziert und zum Netzwerkprozessserver 103 übertragen werden.

Der Netzwerkprozessserver 103 kann beispielsweise in einer privaten Cloud-Processing-Infrastruktur angeordnet sein, welche den Anwendungsprozess 309 beispielsweise mittels eines Prozessors 311 ausführt.

Der Verfahrensablauf gemäß dem zweiten Anwendungsszenario 303 entspricht dem Verfahrensablauf gemäß dem ersten Anwendungsszenario 301. So stellt der Netzwerkdatenserver 101 gemäß dem zweiten Anwendungsszenario 303 eine Anzahl von Anwendungsprozessbeschreibungen 313, 315, 317 bereit, welche beispielsweise eine Erreichbarkeit von Zielen, die Verwaltung von gefährlichen Gütern oder Notfallszenarien implementieren können. Die ausgewählte Anwendungsprozessbeschreibung kann direkt erworben oder bestellt und zu der Datenverarbeitungsanlage 108 über ein Kommunikationsnetzwerk übertragen werden. Dort kann diese evaluiert werden. Daraufhin kann auf der Basis der ausgewählten Anwendungsprozessbeschreibung beispielsweise ein ausführbarer Anwendungsprozessquellcode 319 realisiert und zur Ausführung zum Netzwerkprozessserver 103 übertragen werden. Der Netzwerkprozessserver 103 kann beispielsweise den ausführbaren Anwendungsquellcode in eine Anwendungssoftware einbetten und diese mittels beispielsweise des Prozessors 311 ausführen. Hierbei kann die Netzwerkinfrastruktur eine offene Cloud-Processing-Infrastruktur sein (public), so dass die Anwendungsprozessquellcodes veröffentlicht sein können.

Gemäß einer Ausführungsform können die Anwendungsprozessbeschreibungen jeweils durch Experten 321 erzeugt und getestet werden. Daraufhin können die Anwendungsprozessbeschreibungen zu dem Netzwerkdatenserver 101 übertragen werden. Auf diese Weise kann erreicht werden, dass eine einmalig erstellte Anwendungsprozessbeschreibung mehrfach genutzt werden kann.

Gemäß einer Ausführungsform kann auf dem Netzwerkdatenserver 101 eine Verkaufsplattform in Software realisiert werden, welche einen Verkauf der ausgewählten Anwendungsprozessbeschreibungen oder die Anwendungsquellcodes unterstützt. Daher können die Unternehmen direkt auf dem Datenserver die benötigten Anwendungsprozesse erwerben oder mieten. So kann der Netzwerkprozessserver 103 den jeweiligen Unternehmen die Anwendungsprozesse auch als Service bereitstellen. Durch diese modulare Architektur können die Unternehmen einzelne Anwendungsprozesse auswählen bzw. definieren, ohne dass hierfür weitere Personalressourcen notwendig sind.

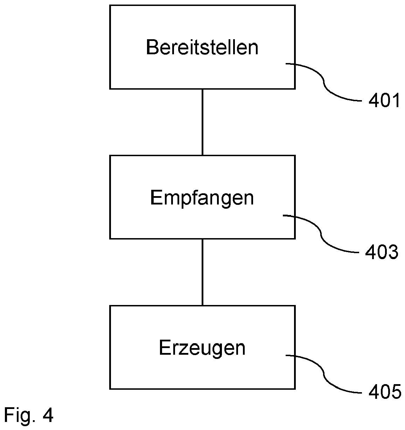

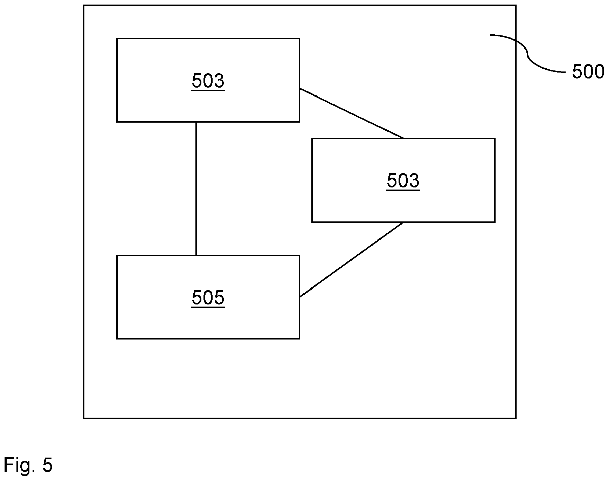

Fig. 4 zeigt ein Ablaufdiagramm eines Verfahrens zum Bereitstellen eines ausführbaren Anwendungsprozessquellcodes auf einem Netzwerkdatenserver, beispielsweise auf dem Netzwerkdatenserver 101, oder auf dem in Fig. 5 dargestellten Netzwerkdatenserver.

Das Verfahren umfasst das Bereitstellen 401 einer Anzahl von Anwendungsprozessbeschreibungen auf dem Netzwerkdatenserver, wobei jede Anwendungsprozessbeschreibung einen Anwendungsprozess definiert, das Empfangen 403 eines Auswahlsignals über ein Kommunikationsnetzwerk durch den Netzwerkdatenserver, wobei das Auswahlsignal eine ausgewählte Anwendungsprozessbeschreibung der Anzahl der Anwendungsprozessbeschreibungen anzeigt, und das Erzeugen 405 eines ausführbaren Anwendungsprozessquellcodes anhand der ausgewählten Anwendungsprozessbeschreibung ansprechend auf das Empfangen des Auswahlsignals. Weitere Verfahrensschritte ergeben sich unmittelbar aus der Funktionalität des Netzwerkdatenservers.

Fig. 5 zeigt einen Netzwerkdatenserver 500 mit einem Speicherbereich 501, insbesondere einer Datenbank, zum Bereitstellen einer Anzahl von Anwendungsprozessbeschreibungen auf dem Netzwerkdatenserver, wobei jede Anwendungsprozessbeschreibung einen Anwendungsprozess definiert, einer Kommunikationsschnittstelle 503 zum Kommunizieren über das Kommunikationsnetzwerk, wobei die Netzwerkkommunikationsschnittstelle ausgebildet ist, das Auswahlsignal zu empfangen, und einem Prozessor 505 zum Erzeugen des ausführbaren Anwendungsprozessquellcodes anhand der ausgewählten Anwendungsprozessbeschreibung ansprechend auf das Empfangen des Auswahlsignals. Der Speicherbereich 501 und die Kommunikationsschnittstelle 503 können wie in Fig. 5 dargestellt mit dem Prozessor 505 verbunden sein bzw. kommunizieren.

Der Netzwerkdatenserver 500 kann gemäß einer Ausführungsform die Merkmale des Netzwerkdatenservers 101 aufweisen oder den Netzwerkdatenserver 101 realisieren.

Der Netzwerkdatenserver 500 kann eingerichtet sein, das Verfahren gemäß Fig. 4 auszuführen. Hierzu kann der Netzwerkdatenserver 500 programmtechnisch eingerichtet sein.

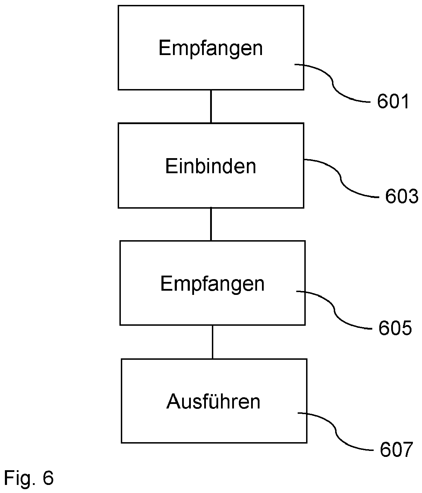

Fig. 6 zeigt ein Ablaufdiagramm eines Verfahrens zum Bereitstellen eines ausführbaren Anwendungsprozessquellcodes auf einem Netzwerkprozessserver einer Netzwerkserver-Infrastruktur, insbesondere einer Cloud-Processing-Infrastruktur. Das Verfahren umfasst das Empfangen 601 des ausführbaren Anwendungsprozessquellcodes durch den Netzwerkprozessserver über ein Kommunikationsnetzwerk, und das Einbinden 603 des ausführbaren Anwendungsprozessquellcodes in eine Anwendungssoftware auf dem Netzwerkprozessserver.

Optional umfasst das Verfahren das Empfangen 605 eines Ausführungsbefehls zur Ausführung des ausführbaren Anwendungsquellcodes oder der Anwendungssoftware durch den Netzwerkprozessserver über das Kommunikationsnetzwerk, insbesondere von einer vorbestimmten Kommunikationsnetzwerkadresse oder von der Datenverarbeitungsanlage 108, und Ausführen 607 des ausführbaren Anwendungsquellcodes oder der Anwendungssoftware ansprechend auf den Empfang des Ausführungsbefehls.

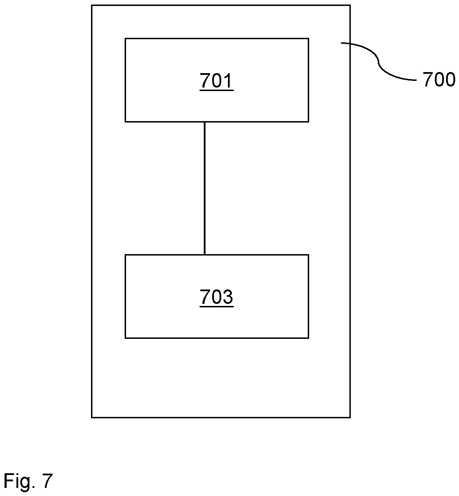

Fig. 7 zeigt ein Blockdiagramm eines Netzwerkprozessservers 700 mit einer Kommunikationsschnittstelle 701 zum Empfangen des ausführbaren Anwendungsprozessquellcodes über ein Kommunikationsnetzwerk, und einem Prozessor 703 zum Einbinden des ausführbaren Anwendungsprozessquellcodes in eine Anwendungssoftware auf dem Netzwerkprozessserver.

Der Netzwerkprozessserver 700 kann gemäß einer Ausführungsform die Merkmale des Netzwerkprozessservers 103 aufweisen oder den Netzwerkprozessserver 103 realisieren.

Der Netzwerkprozessserver 700 kann eingerichtet sein, das Verfahren gemäß Fig. 6 auszuführen. Hierzu kann der Netzwerkprozessserver 700 programmtechnisch eingerichtet sein.

## Patentansprüche

1. Verfahren zum Bereitstellen eines Anwendungsprozesses auf einem Netzwerkprozessserver einer Netzwerkserver-Infrastruktur, mit:
Auswählen (201) einer Anwendungsprozessbeschreibung aus einer Anzahl von Anwendungsprozessbeschreibungen, um eine ausgewählte Anwendungsprozessbeschreibung zu erhalten, wobei die Anzahl von Anwendungsprozessbeschreibungen auf einem Netzwerkdatenserver bereitgestellt ist und wobei jede Anwendungsprozessbeschreibung einen Anwendungsprozess definiert;
Bereitstellen (203) eines ausführbaren Anwendungsprozessquellcodes, welcher der ausgewählten Anwendungsprozessbeschreibung zugeordnet ist; und
Übertragen (205) des ausführbaren Anwendungsprozessquellcodes oder der ausgewählten Anwendungsprozessbeschreibung zu dem Netzwerkprozessserver über ein Kommunikationsnetzwerk, um den Anwendungsprozess auf dem Netzwerkprozessserver bereitzustellen.

2. Verfahren nach Anspruch 1, das ferner das Anzeigen der Anzahl von Anwendungsprozessbeschreibungen, insbesondere mittels einer graphischen Benutzerschnittstelle oder eines Browsers umfasst.

3. Verfahren nach Anspruch 1 oder 2, wobei das Auswählen (201) der Anwendungsprozessbeschreibung eine Übertragung eines Auswahlsignals, das die ausgewählte Anwendungsprozessbeschreibung anzeigt, zu dem Netzwerkdatenserver über ein Kommunikationsnetzwerk umfasst.

4. Verfahren nach einem der vorstehenden Ansprüche, wobei das Bereitstellen (203) des ausführbaren Anwendungsprozessquellcodes das Erzeugen des Anwendungsprozessquellcodes, insbesondere das automatische Erzeugen des Anwendungsprozessquellcodes mittels eines Softwareprogramms anhand der ausgewählten Anwendungsprozessbeschreibung umfasst.

5. Verfahren nach Anspruch 4, wobei die ausgewählte Anwendungsprozessbeschreibung
mittels eines Kompilierers kompiliert wird, oder
mittels eines Interpreters verarbeitet wird,
um den ausführbaren Anwendungsprozessquellcode zu erzeugen.

6. Verfahren nach Anspruch 4 oder 5, wobei der ausführbare Anwendungsprozessquellcode anhand der ausgewählten Anwendungsprozessbeschreibung auf dem Netzwerkdatenserver erzeugt wird.

7. Verfahren nach Anspruch 6, wobei der ausführbare Anwendungsprozessquellcode von dem Netzwerkdatenserver über ein Kommunikationsnetzwerk zu einer Datenverarbeitungsanlage oder zum dem Netzwerkprozessserver übertragen wird.

8. Verfahren nach Anspruch 4 oder 5, wobei die ausgewählte Anwendungsprozessbeschreibung von dem Netzwerkdatenserver über ein Kommunikationsnetzwerk zu einer Datenverarbeitungsanlage übertragen wird, und wobei der ausführbare Anwendungsprozessquellcode auf der Datenverarbeitungsanlage mittels des Kompilierers oder des Interpreters erzeugt wird.

9. Verfahren nach Anspruch 8, wobei die ausgewählte Anwendungsprozessbeschreibung von dem Netzwerkdatenserver über ein Kommunikationsnetzwerk zu der Datenverarbeitungsanlage über einen verschlüsselten Kommunikationskanal oder verschlüsselt oder mit Authentifizierungsinformation versehen übertragen wird.

10. Verfahren nach einem der Ansprüche 7 bis 9, wobei der ausführbare Anwendungsprozessquellcode in einer Softwaretestumgebung der Datenverarbeitungsanlage ausgeführt wird, um den ausführbaren Anwendungsprozessquellcode zu verifizieren.

11. Verfahren nach Anspruch 10, wobei die Softwaretestumgebung ein geschlossenes Softwaresystem, insbesondere ein für einen Benutzer der Datenverarbeitungsanlage oder für Softwareprozesse der Datenverarbeitungsanlage unzugängliches Softwaresystem ist.

12. Verfahren nach einem der Ansprüche 7 bis 11, wobei der ausführbare Anwendungsprozessquellcode von der Datenverarbeitungsanlage über ein Kommunikationsnetzwerk zu dem Netzwerkprozessserver übertragen wird.

13. Verfahren gemäß Anspruch 4 oder 5, wobei die ausgewählte Anwendungsprozessbeschreibung von dem Netzwerkdatenserver über ein Kommunikationsnetzwerk zu dem Netzwerkprozessserver übertragen wird, und wobei der ausführbare Anwendungsprozessquellcode auf dem Netzwerkprozessserver mittels des Kompilierers oder des Interpreters erzeugt wird.

14. Verfahren gemäß einem der Ansprüche 4 bis 13, wobei die ausgewählte Anwendungsprozessbeschreibung eine Mehrzahl von Sub-Prozessen definiert, wobei die Sub-Prozesse gemeinsam den Anwendungsprozess implementieren, und wobei im Schritt des Erzeugens des ausführbaren Anwendungsprozessquellcodes eine Anzahl von Sub-Prozessen als separate Sub-Quellcodes erzeugt und bereitgestellt wird, oder wobei der ausführbare Anwendungsprozessquellcode als ein einziger Quellcode erzeugt wird, um den Anwendungsprozess zu implementieren.

15. Verfahren nach einem der vorstehenden Ansprüche, wobei der ausführbare Anwendungsprozessquellcode in eine Anwendungssoftware, insbesondere in eine Laufzeitumgebung, auf dem Netzwerkprozessserver eingebettet wird.

16. Verfahren nach einem der vorstehenden Ansprüche, wobei der ausführbare Anwendungsprozessquellcode auf dem Netzwerkprozessserver ausgeführt wird.

17. Verfahren nach einem der vorstehenden Ansprüche, mit:
im Schritt des Auswählens (201), Übertragen einer graphischen Anzeigeinformation von dem Netzwerkdatenserver zu einer Datenverarbeitungsanlage über ein Kommunikationsnetzwerk zum Anzeigen der Anzahl von auswählbaren Anwendungsprozessbeschreibungen und Übertragen eines Auswahlsignals von der Datenverarbeitungsanlage zu dem Netzwerkdatenserver zum Auswählen der ausgewählten Anwendungsprozessbeschreibung;
im Schritt des Bereitstellens (201), ansprechend auf einen Empfang des Auswahlsignals durch den Netzwerkdatenserver, Übertragen der ausgewählten Anwendungsprozessbeschreibung zu der Datenverarbeitungsanlage über das Kommunikationsnetzwerk und Erzeugen des ausführbaren Anwendungsprozessquellcodes mittels eines Softwareprogramms auf der Datenverarbeitungsanlage, um den ausführbaren Anwendungsprozessquellcode bereitzustellen, oder
im Schritt des Bereitstellens (201), Übertragen des ausführbaren Anwendungsprozessquellcodes von dem Netzwerkdatenserver zu der
Datenverarbeitungsanlage über das Kommunikationsnetzwerk, um den ausführbaren Anwendungsprozessquellcode bereitzustellen;
Ausführen des ausführbaren Anwendungsprozessquellcodes mittels der Datenverarbeitungsanlage, um den ausführbaren Anwendungsprozessquellcode zu überprüfen;
Übertragen (205) des ausführbaren Anwendungsprozessquellcodes von der Datenverarbeitungsanlage zu dem Netzwerkprozessserver über ein Kommunikationsnetzwerk, und
Ausführen des ausführbaren Anwendungsprozessquellcodes auf dem Netzwerkprozessserver oder Einbinden des ausführbaren Anwendungsprozessquellcodes in eine Anwendungssoftware auf dem Netzwerkprozessserver, das einem Benutzer der Datenverarbeitungsanlage zugeordnet ist.

18. Verfahren nach einem der vorstehenden Ansprüche, wobei die Anzahl von Anwendungsprozessbeschreibungen in einer Datenbank elektronisch gespeichert ist, welche eine Anwendungsbibliothek realisiert, und wobei die Anwendungsprozessbeschreibung aus der Anwendungsbibliothek ausgewählt wird.

19. Verfahren nach einem der vorstehenden Ansprüche, das ferner eine Änderung der ausgewählten Anwendungsprozessbeschreibung nach der Auswahl umfasst, um eine geänderte Anwendungsprozessbeschreibung zu erhalten, und wobei die geänderte Anwendungsprozessbeschreibung als die ausgewählte Anwendungsprozessbeschreibung gehandhabt wird.

20. Verfahren nach Anspruch 19, wobei die Änderung der ausgewählten Anwendungsprozessbeschreibung mittels einer graphischen Benutzerschnittstelle durchgeführt wird.

21. Verfahren zum Bereitstellen eines ausführbaren Anwendungsprozessquellcodes auf einem Netzwerkdatenserver, mit:
Bereitstellen (401) einer Anzahl von Anwendungsprozessbeschreibungen auf dem Netzwerkdatenserver, wobei jede Anwendungsprozessbeschreibung einen Anwendungsprozess definiert;
Empfangen (403) eines Auswahlsignals über ein Kommunikationsnetzwerk durch den Netzwerkdatenserver, wobei das Auswahlsignal eine ausgewählte Anwendungsprozessbeschreibung der Anzahl der Anwendungsprozessbeschreibungen anzeigt; und
Erzeugen (405) eines ausführbaren Anwendungsprozessquellcodes anhand der ausgewählten Anwendungsprozessbeschreibung ansprechend auf das Empfangen des Auswahlsignals.

22. Verfahren nach Anspruch 21, wobei der ausführbare Anwendungsprozessquellcode durch den Netzwerkdatenserver für die Übertragung über das Kommunikationsnetzwerk, insbesondere für einen Download, bereitgestellt wird.

23. Verfahren nach Anspruch 21 oder 22, wobei der ausführbare Anwendungsprozessquellcode über das Kommunikationsnetzwerk, insbesondere zu einer Datenverarbeitungsanlage oder an eine Kommunikationsnetzwerkadresse, ausgesendet wird.

24. Verfahren nach einem der Ansprüche 21 bis 23, wobei der Schritt des Erzeugens (405) des ausführbaren Anwendungsprozessquellcodes das automatische Kompilieren oder das automatische Interpretieren der ausgewählten Anwendungsprozessbeschreibung umfasst.

25. Verfahren nach einem der Ansprüche 21 bis 24, wobei der Schritt des Bereitstellens (401) das Anzeigen von Eigenschaften der Anzahl der Anwendungsprozessbeschreibungen umfasst.

26. Verfahren nach einem der Ansprüche 21 bis 25, wobei der Schritt des Bereitstellens (401) das Anzeigen einer elektronischen Liste mit der Anzahl der Anwendungsprozessbeschreibungen oder das Bereitstellen der Anzahl der Anwendungsprozessbeschreibungen für eine Anzeige, insbesondere mittels eines Browsers, umfasst.

27. Verfahren nach Anspruch 26, wobei die elektronische Liste als eine Datei, insbesondere als eine HTML- oder eine XML-Datei, durch den Netzwerkdatenserver über das Kommunikationsnetzwerk ausgesendet wird.

28. Verfahren nach Anspruch 27, wobei die elektronische Liste ansprechend auf einen Empfang einer Aufforderung zum Aussenden der elektronischen Liste über das Kommunikationsnetzwerk ausgesendet wird.

29. Verfahren nach einem der Ansprüche 21 bis 28, bei dem die ausgewählte Anwendungsprozessbeschreibung auf dem Datenserver geändert wird, um eine geänderte Anwendungsprozessbeschreibung zu erhalten, welche als die ausgewählte Anwendungsprozessbeschreibung gehandhabt wird.

30. Verfahren nach Anspruch 29, wobei die ausgewählte Anwendungsprozessbeschreibung mittels einer graphischen Benutzerschnittstelle, insbesondere einer graphischen Benutzerschnittstelle mit vorgegebenen Parametern, geändert wird, insbesondere um eine Schnittstelle der auswählbaren Anwendungsbeschreibung, welche einen Anwendungsprozess definiert, zu einem anderen Anwendungsprozess zu erzeugen oder anzupassen.

31. Verfahren einem der Ansprüche 21 bis 30, wobei die Anzahl der Anwendungsprozessbeschreibungen durch eine Datenbank des Netzwerkdatenservers bereitgestellt wird.

32. Verfahren nach einem der Ansprüche 21 bis 31, mit dem Schritt des Empfangens einer Anwendungsprozessbeschreibung über ein Kommunikationsnetzwerk durch den Netzwerkdatenserver.

33. Verfahren nach Anspruch 32, bei dem die empfangene Anwendungsprozessbeschreibung der Anzahl der Anwendungsprozessbeschreibungen hinzugefügt wird, insbesondere in einer Datenbank des Netzwerkdatenservers, in welcher die Anzahl der Anwendungsprozessbeschreibungen gespeichert ist.

34. Netzwerkdatenserver zum Bereitstellen eines ausführbaren Anwendungsprozessquellcodes, welcher eingerichtet ist, das Verfahren nach einem der Ansprüche 21 bis 33 auszuführen.

35. Netzwerkdatenserver nach Anspruch 34, mit:
einem Speicherbereich (501), insbesondere einer Datenbank, zum Bereitstellen einer Anzahl von Anwendungsprozessbeschreibungen auf dem Netzwerkdatenserver, wobei jede Anwendungsprozessbeschreibung einen Anwendungsprozess definiert;
einer Kommunikationsschnittstelle (503) zum Kommunizieren über das Kommunikationsnetzwerk, wobei die Netzwerkkommunikationsschnittstelle ausgebildet ist, das Auswahlsignal zu empfangen; und
einem Prozessor (505) zum Erzeugen des ausführbaren Anwendungsprozessquellcodes anhand der ausgewählten Anwendungsprozessbeschreibung ansprechend auf das Empfangen des Auswahlsignals.

36. Netzwerkdatenserver nach Anspruch 35, wobei die Kommunikationsschnittstelle (503) ausgebildet ist, den ausführbaren Anwendungsprozessquellcode über das Kommunikationsnetzwerk an eine Kommunikationsnetzwerkadresse auszusenden.

37. Netzwerkdatenserver nach einem der Ansprüche 34 bis 36, wobei der Prozessor (505) einen Kompilierer oder einen Interpreter zum Erzeugen des ausführbaren Anwendungsprozessquellcodes umfasst.

38. Netzwerkdatenserver nach einem der Ansprüche 34 bis 37, wobei der Prozessor (505) ausgebildet ist, eine graphische Benutzerschnittstelle zum Ändern der ausgewählten Anwendungsbeschreibung gemäß zumindest einem vorgegebenen, insbesondere auswählbaren Parameter, zu implementieren, insbesondere um eine Schnittstelle der auswählbaren Anwendungsbeschreibung, welche einen Anwendungsprozess definiert, zu einem anderen Anwendungsprozess zu schaffen.

39. Netzwerkdatenserver nach einem der Ansprüche 34 bis 38, wobei der Prozessor (505) ausgebildet ist, die ausgewählte Anwendungsprozessbeschreibung gemäß einem vorgegebenen Parameter zu ändern und die geänderte Anwendungsprozessbeschreibung als die ausgewählte Anwendungsprozessbeschreibung zu handhaben.

40. Netzwerkdatenserver nach einem der Ansprüche 34 bis 39, wobei der Speicherbereich (501) über das Kommunikationsnetzwerk zum Anzeigen oder Auswählen der Anwendungsprozessbeschreibung erreichbar oder addressierbar ist.

41. Netzwerkdatenserver nach einem der Ansprüche 34 bis 40, wobei der Speicherbereich (501) oder der Prozessor ausgebildet ist, eine anzeigbare elektronische Liste mit der Anzahl der Anwendungsprozessbeschreibungen bereitzustellen.

42. Netzwerkdatenserver nach einem der Ansprüche 34 bis 41, wobei der Prozessor (505) ausgebildet ist, den ausführbaren Anwendungsprozesscode, insbesondere mittels einer Laufzeitumgebung, auszuführen.

43. Verfahren zum Bereitstellen eines ausführbaren Anwendungsprozessquellcodes auf einem Netzwerkprozessserver einer Netzwerkserver-Infrastruktur, mit:
Empfangen (601) des ausführbaren Anwendungsprozessquellcodes durch den Netzwerkprozessserver über ein Kommunikationsnetzwerk; und
Einbinden (603) des ausführbaren Anwendungsprozessquellcodes in eine Anwendungssoftware auf dem Netzwerkprozessserver.

44. Verfahren nach Anspruch 43, wobei die Anwendungssoftware eine Laufzeitumgebung mit modular einbindbaren, ausführbaren Anwendungsprozessquellcodes ist, und wobei der ausführbare Anwendungsprozessquellcode im Schritt des Einbindens (603) als ausführbare Datei auf dem Netzwerkprozessserver, insbesondere innerhalb der Laufzeitumgebung, gespeichert wird.

45. Verfahren gemäß einem der Ansprüche 43 oder 44, wobei der ausführbare Anwendungsprozessquellcode eine Schnittstelle zu einem anderen ausführbare Anwendungsprozessquellcode oder zu der Anwendungssoftware umfasst, und wobei in dem Schritt des Einbindens (603) der ausführbare Anwendungsprozessquellcode über die Schnittstelle mit dem anderen ausführbaren Anwendungsprozessquellcode verbunden oder in die Anwendungssoftware eingebunden wird.

46. Verfahren gemäß einem der Ansprüche 43 bis 45, wobei die Anwendungssoftware eine Laufzeitumgebung zur Ausführung des ausführbaren Anwendungsprozessquellcodes ist, und wobei in dem Schritt des Einbindens des ausführbaren Anwendungsprozessquellcodes automatisch ein Eintrag über den ausführbaren Anwendungsprozessquellcode in der Laufzeitumgebung erzeugt wird.

47. Verfahren gemäß einem der Ansprüche 43 bis 46, wobei der ausführbare Anwendungsprozessquellcode auf dem Netzwerkprozessserver ausgeführt wird.

48. Verfahren gemäß einem der Ansprüche 43 bis 47, wobei der ausführbare Anwendungsprozessquellcode auf dem Netzwerkprozessserver ausgeführt wird, und wobei ein Ergebnis der Ausführung des ausführbaren Anwendungsprozessquellcode über das Kommunikationsnetzwerk, insbesondere an eine vorbestimmte Kommunikationsnetzwerkadresse, ausgesendet wird.

49. Verfahren gemäß einem der Ansprüche 43 bis 48, mit den Schritten:
Empfangen (605) eines Ausführungsbefehls zur Ausführung des ausführbaren Anwendungsquellcodes oder der Anwendungssoftware durch den Netzwerkprozessserver über das Kommunikationsnetzwerk, insbesondere von einer vorbestimmten Kommunikationsnetzwerkadresse; und
Ausführen (607) des ausführbaren Anwendungsquellcodes oder der Anwendungssoftware ansprechend auf den Empfang des Ausführungsbefehls.

50. Verfahren gemäß einem der Ansprüche 43 bis 49, wobei die Netzwerk-Infrastruktur eine Cloud-Processing-Infrastruktur ist, und wobei das Verfahren mittels des Netzwerkprozessservers der Cloud-Processing-Infrastruktur ausgeführt wird.

51. Netzwerkprozessserver, welcher ausgebildet ist, das Verfahren gemäß einem der Ansprüche 43 bis 50 auszuführen.

52. Netzwerkprozessserver gemäß Anspruch 51, mit:
einer Kommunikationsschnittstelle (701) zum Empfangen des ausführbaren Anwendungsprozessquellcodes über ein Kommunikationsnetzwerk; und
einem Prozessor (703) zum Einbinden des ausführbaren Anwendungsprozessquellcodes in eine Anwendungssoftware auf dem Netzwerkprozessserver.

53. Netzwerkprozessserver gemäß Anspruch 52, wobei die Anwendungssoftware eine Laufzeitumgebung zur Ausführung des ausführbaren Anwendungsprozessquellcodes ist, und wobei der Prozessor (703) ausgebildet ist, den ausführbaren Anwendungsprozessquellcode mittels der Laufzeitumgebung auszuführen.

54. Netzwerkprozessserver gemäß Anspruch 52 oder 53, wobei die Kommunikationsschnittstelle (701) ausgebildet ist, ein Ausführungsergebnis der Ausführung des ausführbaren Anwendungsprozessquellcodes über das Kommunikationsnetzwerk an eine Kommunikationsnetzwerkadresse auszusenden.

55. Netzwerkprozessserver gemäß einem der Ansprüche 51 bis 54, wobei die Kommunikationsschnittstelle (701) ausgebildet ist, einen Ausführungsbefehl zur Ausführung des ausführbaren Anwendungsquellcodes oder der Anwendungssoftware durch den Netzwerkprozessserver über das Kommunikationsnetzwerk, insbesondere von einer vorbestimmten Kommunikationsnetzwerkadresse, zu empfangen; und wobei
der Prozessor (705) ausgebildet ist, den ausführbaren Anwendungsquellcode oder die Anwendungssoftware ansprechend auf den Empfang des Ausführungsbefehls auszuführen.

56. Netzwerkserversystem zum Bereitstellen eines Anwendungsprozesses, mit einem Netzwerkprozessserver (103) einer Netzwerkserver-Infrastruktur (105) und einem Netzwerkdatenserver (101), wobei
der Netzwerkdatenserver (101) eingerichtet ist, eine Anzahl von Anwendungsprozessbeschreibungen bereitzustellen, wobei jede Anwendungsprozessbeschreibung einen Anwendungsprozess definiert, wobei der Netzwerkdatenserver (101) ferner eingerichtet ist, über ein Kommunikationsnetzwerk ein Auswahlsignal zu empfangen, das eine ausgewählte Anwendungsprozessbeschreibung anzeigt, und ansprechend auf den Empfang des Auswahlsignals die ausgewählte Anwendungsprozessbeschreibung oder einen der ausgewählten Anwendungsprozessbeschreibung zugeordneten ausführbaren Anwendungsprozessquellcode über ein Kommunikationsnetzwerk auszusenden, wobei
der Netzwerkprozessserver (103) ausgebildet ist, die ausgewählte Anwendungsprozessbeschreibung oder den ausführbaren Anwendungsprozessquellcode über ein Kommunikationsnetzwerk zu empfangen, um den Anwendungsprozess auf dem Netzwerkprozessserver bereitzustellen.

57. Netzwerkserversystem gemäß Anspruch 56, wobei der Netzwerkprozessserver (103) und/oder der Netzwerkdatenserver (101) einen Kompilierer oder einen Interpreter zum Erzeugen des ausführbaren Anwendungsprozessquellcodes anhand der ausgewählten Anwendungsprozessbeschreibung umfassen.

58. Netzwerkserversystem gemäß Anspruch 56 oder 57, wobei der Netzwerkprozessserver (103) ausgebildet ist, den ausführbaren Anwendungsprozessquellcode auszuführen.

59. Netzwerkserversystem gemäß Anspruch 56, 57 oder 58, wobei der Netzwerkdatenserver (101) ausgebildet ist, die ausgewählte Anwendungsprozessbeschreibung und/oder den ausführbaren Anwendungsprozessquellcode gegen Vervielfältigen, insbesondere mittels eines Digitalen Rechtemanagements zu sichern.

60. Netzwerkserversystem gemäß einem der Ansprüche 56 bis 59, wobei die Netzwerkserver-Infrastruktur (105) eine Cloud-Processing-Infrastruktur ist.

61. Netzwerkserversystem gemäß einem der Ansprüche 56 bis 60, das ausgebildet ist, das Verfahren gemäß einem der Ansprüche 1 bis 33 oder 43 bis 50 auszuführen.

62. Netzwerkserversystem gemäß einem der Ansprüche 56 bis 60, wobei der Netzwerkdatenserver (101) die Merkmale des Netzwerkservers gemäß einem der Ansprüche 34 bis 42 umfasst, und wobei der Netzwerkprozessserver (103) die Merkmale des Netzwerkservers gemäß einem der Ansprüche 51 bis 55 umfasst.

63. Computerprogramm mit einem Programmcode, das das Verfahren nach einem der Ansprüche 1 bis 33 oder 43 bis 50 implementiert.
